# FASCICULE DE BREVET EUROPEEN

(11) **EP 1 102 453 B1**
(45) Date de publication et mention de la délivrance du brevet: **14.02.2007**
(21) Numéro de dépôt: 00403202.5
(22) Date de dépôt: 16.11.2000
(51) Int. Cl.: H04L 29/06, H04Q 7/32

(54) **Procédé de provisionnement domestique et itinerant pour un terminal mobile**
Verfahren zur Bereitstellung einer häuslichen und beweglichen Anbindung für ein Mobilfunkendgerät
Method for domestic and roaming provision for a mobile terminal

(30) Priorité: 22.11.1999 FR 9914637
(43) Date de publication de la demande: 23.05.2001
(73) Titulaire: ALCATEL, 75008 Paris (FR)
(72) Inventeur: Helaine, Hubert, Berkshire RG5 4UH (GB); Bury, Sébastien, 75002 Paris (FR)
(74) Mandataire: Lamoureux, Bernard

(56) Documents cités:
- EP-A- 0 889 660
- EP-A- 0 944 203
- EP-A- 0 951 191
- WO-A-99/07173
- US-A- 5 371 794
- "DIGITAL CELLULAR TELECOMMUNICATIONS SYSTEM (PHASE 2+);MOBILE STATION EXECUTION ENVIRONMENT (MExE); SERVICE DESCRIPTION; Stage 1 (GSM 02.57 version 7.1.0 Release 1998) ETSI TS 101 741 v7.1.0" EUROPEAN TELECOMMUNICATION STANDARD, août 1999 (1999-08), pages 1-21, XP002145174

## Description

La présente invention concerne l'établissement de connexions à un réseau de données pour des terminaux, notamment mobiles, et plus particulièrement le provisionnement des données nécessaires à l'établissement d'une connexion.

De façon bien connue, l'établissement de connexions à travers un réseau de données en mode paquet, tel que le réseau Internet, implique l'allocation- d'une adresse sur le réseau de données. L'allocation d'adresse est pour la plupart des utilisateurs une allocation d'adresse dynamique, effectuée par un fournisseur d'accès auprès duquel l'utilisateur est référencé. On appelle provisionnement primaire, ou provisionnement des données primaires, l'étape de fourniture à un utilisateur des données permettant d'établir une première connexion à un fournisseur d'accès. Ces données comprennent tous les paramètres de toutes les couches nécessaires à la connexion au fournisseur d'accès, et par exemple le numéro de téléphone, le support de transmission utilisé, une identification d'utilisateur, un mot de passe etc. Dans le cas de connexions à un fournisseur d'accès à l'aide d'un ordinateur, le provisionnement primaire s'effectue souvent en fournissant à l'utilisateur un cédérom contenant les données de provisionnement, avec une adresse temporaire. Il est aussi connu de fournir les données de provisionnement primaire par courrier; les données sont alors recopiées par l'utilisateur à l'invite, à l'aide d'un logiciel approprié. Le document EP 889 660 décrit une station de base qui transmet à un terminal une information de notification pour lui permettre de se connecter à Internet. Le document EP 951 191 décrit l'utilisation d'un marque pour la transmission d'un code à un terminal.

Apparaissent actuellement des terminaux mobiles, qui ont outre une fonction de terminal pour réseau de téléphonie, une fonction de terminal pour des connexions de type Internet. Pour de tels terminaux, le réseau de téléphonie sert de réseau d'accès au réseau de données. Pour de tels terminaux, des solutions au problème du provisionnement primaire ont été proposées. Les demandes de brevet déposées le même jour que la présente demande, EP 1 102 451 et EP 1 102 452 et intitulées " Procédé de validation de données dans un terminal" et "Procédé de validation du provisionnement primaire d'un terminal" fournissent des solutions avantageuses pour le provisionnement des terminaux mobiles. Les données de provisionnement sont alors stockées dans un emplacement physique ou dans un fichier logique du terminal, et sont le cas échéant mises à jour lors du provisionnement suivant.

Il est en outre connu de permettre à des terminaux mobiles d'utiliser des réseaux publics (PLMN ou "public land mobile network" en langue anglaise) différents. Un terminal mobile ou terminal utilisateur est habituellement attaché à un réseau public mobile donné ou réseau d'accès domestique, qui est le réseau d'accès auprès duquel il est abonné. Il peut aussi disposer d'une faculté de connexion dans d'autres réseaux publics. On appelle "roaming" ou changement de réseau le passage d'un réseau d'accès à l'autre.

Un problème nouveau rencontré pour les terminaux mobiles présentant une capacité de connexion à un réseau de données est celui du provisionnement en cas de changement de réseau d'accès. De fait, lors d'un changement de réseau d'accès, la mise à jour des données de provisionnement dans le terminal est nécessaire pour continuer à accéder aux services du réseau de données. Lors du retour dans le réseau d'accès domestique, un nouveau provisionnement est encore nécessaire, pour recharger les données de provisionnement pour le réseau domestique.

Ce problème rencontré lors du "roaming" entre réseaux d'accès s'applique aussi au "roaming" entre utilisateurs, c'est-à-dire lorsqu'un même terminal est utilisé par plusieurs utilisateurs, par exemple avec des cartes SIM (module d'identification d'abonné) distincts. On qualifie aussi ce changement d'utilisateur par changement des cartes SIM à l'aide des termes "roaming plastique".

L'invention apporte une solution à ces problèmes nouveaux. Elle permet un changement d'utilisateur ou un changement de réseau d'accès, sans perdre pour autant les données de provisionnement. Le retour dans le réseau d'accès domestique, ou encore un autre changement d'utilisateur, est possible sans qu'il soit nécessaire de procéder à nouveau au provisionnement.

Plus précisément, l'invention propose un terminal de télécommunication, pour l'accès à un réseau de données à travers un réseau d'accès en utilisant un ensemble de données de provisionnement, le terminal présentant des moyens de stockage d'un ensemble de données de provisionnement courantes, et des moyens de stockage d'au moins un ensemble de données de provisionnement protégées ne pouvant être mises à jour sans intervention de l'utilisateur du terminal.

L'invention propose aussi un procédé de mise à jour de données de provisionnement dans un terminal de télécommunications, pour un accès à un réseau de données à travers un réseau d'accès et un fournisseur d'accès, le procédé comprenant les étapes de :
- sauvegarde de données de provisionnement pour un réseau d'accès, un fournisseur d'accès ou un utilisateur; et
- protection des données de provisionnement sauvegardées pour empêcher leur mise à jour sans intervention de l'utilisateur, d'un opérateur du réseau d'accès ou du fournisseur d'accès.

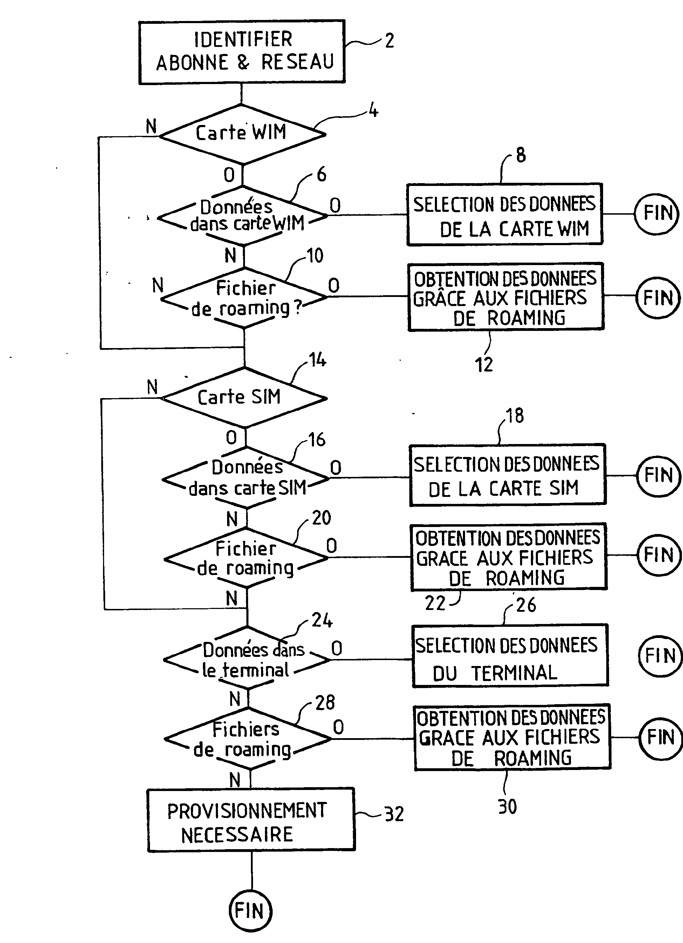

D'autres caractéristiques et avantages de l'invention apparaîtront à la lecture de la description qui suit de modes de réalisation de l'invention, donnée à titre d'exemple, et en référence à la figure unique, qui montre un ordinogramme d'un procédé selon l'invention.

Pour éviter les mises à jour des données de provisionnement lors des changements de réseau d'accès ou d'utilisateur, l'invention propose de prévoir dans un terminal des moyens de stockage de données de provisionnement protégées. Ces données de provisionnement ne sont pas mises à jour automatiquement lors du changement d'utilisateur, du changement de réseau d'accès ou lors de la mise à jour du provisionnement, mais uniquement sur intervention de l'utilisateur. L'invention permet ainsi, lors du retour dans le réseau d'accès domestique, ou lors du changement d'utilisateur, de retrouver les données de provisionnement, sans pour autant devoir procéder à nouveau à un provisionnement des données. Les données de provisionnement courantes sont alors une copie des données protégées ou ces données protégées elles-mêmes.

Comme indiqué plus haut, dans les terminaux de l'art antérieur, les données de provisionnement sont stockées dans un fichier logique, ou dans un emplacement physique dans le terminal, et sont mises à jour lors de chaque nouveau provisionnement. Cette mise à jour peut advenir lors d'un changement de réseau d'accès, si l'utilisateur du terminal procède à un provisionnement dans le nouveau réseau; elle peut aussi advenir lors d'un changement d'utilisateur, si le nouvel utilisateur procède à un nouveau provisionnement. Il peut aussi s'agir d'un provisionnement pour un nouvel accès au réseau Internet, par l'intermédiaire d'un nouveau fournisseur d'accès.

L'invention propose de prévoir non seulement de stocker dans un terminal les données de provisionnement courantes, mais aussi de stocker dans le terminal des données de positionnement protégées, qui ne sont mises à jour que sur intervention de l'utilisateur.

Dans un premier mode de réalisation les données de provisionnement protégées sont des données de provisionnement correspondant à un réseau d'accès particulier, appelé réseau d'accès domestique. Ce réseau d'accès domestique est le réseau d'accès habituel de l'utilisateur du terminal. Lors d'un changement temporaire de réseau d'accès, l'utilisateur charge des nouvelles données de provisionnement, qui sont stockées dans le fichier destiné à contenir les données de provisionnement courantes. Il peut alors accéder aux services de données, en utilisant les données de provisionnement courantes. Lors du retour dans le réseau d'accès domestique, les données de provisionnement contenues dans les moyens de stockage des données de provisionnement protégées peuvent être recopiés dans les moyens de stockage des données de provisionnement courantes; il est alors possible d'accéder au réseau de données, sans devoir procéder à un nouveau provisionnement.

Dans un second mode de réalisation, les données de provisionnement protégées sont des données de provisionnement correspondant à un utilisateur donné d'un réseau d'accès particulier. Il est alors possible, pour un même réseau d'accès, de changer d'utilisateur du réseau d'accès, sans pour autant devoir toujours procéder à un nouveau provisionnement.

Dans ces deux premiers modes de réalisation, les données de provisionnement peuvent être stockées dans un support dédié au réseau d'accès ou à l'utilisateur dans le réseau d'accès. Typiquement, ce support peut être une carte SIM dans le cas d'un réseau d'accès téléphonique de type GSM. Le réseau d'accès domestique est le PLMN domestique, et l'utilisateur est identifié par son IMSI (acronyme de l'anglais "International Mobile Subscriber Identity" ou identité international de l'abonné mobile).

Dans un troisième mode de réalisation, les données de provisionnement protégées sont des données correspondant à plusieurs accès possibles au réseau de données. Typiquement, il peut s'agir de plusieurs fournisseurs d'accès au réseau de données.. Il est alors possible pour l'utilisateur de stocker des données de provisionnement protégées, correspondant à un accès habituel au réseau de données. L'utilisateur peut alors procéder à un provisionnement pour un autre accès au réseau de données, par exemple pour un autre fournisseur d'accès; il reste possible de revenir à l'ancien fournisseur d'accès, en recopiant les données de provisionnement contenues dans les moyens de stockage de données de provisionnement protégées.

Dans un quatrième mode de réalisation, les données de provisionnement protégées sont des données de provisionnement correspondant à un utilisateur donné pour un fournisseur d'accès particulier. Il est alors possible, pour un même fournisseur d'accès, de changer d'identité d'utilisateur, sans pour autant devoir toujours procéder à un nouveau provisionnement.

Dans les troisième et quatrième modes de réalisation, les données de provisionnement peuvent être stockées dans un support dédié au fournisseur d'accès ou de service, et typiquement dans un module d'identification de WAP ("Wireless application protocol" ou protocole d'application sans fil en langue anglaise) ou WIM dans l'acronyme de l'expression en langue anglaise.

Dans des cinquième et sixième modes de réalisation, l'invention propose de stocker des données de provisionnement protégées pour plusieurs fournisseurs de contenu, ou pour plusieurs utilisateurs chez des fournisseurs de contenu.

Dans tous les modes de réalisation, on peut prévoir de stocker plusieurs ensembles de données de provisionnement, correspondant à plusieurs réseaux d'accès, à plusieurs utilisateurs des réseaux d'accès, à plusieurs accès ou fournisseurs d'accès au réseau de données, à plusieurs utilisateurs identifiés chez un fournisseur d'accès au réseau de données, à plusieurs fournisseurs de contenu, ou encore à plusieurs utilisateurs pour un fournisseur de contenu. Il est alors avantageux de stocker, pour chaque ensemble de données de provisionnement, des indications du réseau d'accès, de l'utilisateur du réseau d'accès, du fournisseur d'accès, de l'utilisateur du fournisseur d'accès, du fournisseur de contenu, ou de l'utilisateur correspondant.

Du point de vue matériel, les moyens de stockage des données de provisionnement protégées peuvent se situer dans le terminal lui-même, dans un support dédié au fournisseur d'accès ou de contenu, ou encore dans un support dédié au réseau d'accès ou à l'utilisateur du réseau d'accès. Le nombre d'ensembles de données de provisionnement sur chaque support dépend de la taille de chaque support.

L'ordinogramme de la figure montre un exemple de mise en oeuvre d'un procédé selon l'invention, dans le cas où le terminal mobile sélectionne automatiquement un ensemble de données de provisionnement adapté. Dans le cas de la figure, sont prévus des moyens de stockage de données de provisionnement protégées :
- dans un support dédié à un fournisseur d'accès - dans l'exemple une carte WIM;
- dans un support dédié à un type de réseau d'accès et à un utilisateur - dans l'exemple une carte SIM;
- dans le mobile lui-même.

Dans chaque cas, des données d'identification sont stockées pour chaque ensemble de données de provisionnement protégées. La gestion des données de provisionnement utilisées est effectuée par le mobile, en fonction des données stockées sur la carte WIM ou sur la carte SIM, ou dans le terminal.

Les étapes de l'ordinogramme de la figure peuvent être mises en oeuvre à l'allumage du terminal, à l'insertion d'une carte SIM, ou à l'insertion d'une carte WIM. A l'allumage, de façon connue en soi, le terminal identifie un abonné et un réseau téléphonique utilisable, dans l'étape 2 de la figure. On passe ensuite à l'étape 4

A l'étape 4, le terminal détermine si une carte WIM est présente. Si tel est le cas, on passe à l'étape 6, et sinon on passe à l'étape 14.

A l'étape 6, le terminal détermine si la carte WIM contient des données de provisionnement protégées pour l'utilisateur de la carte WIM et le réseau d'accès courant. Si tel est le cas, on passe à l'étape 8, sinon, on passe à l'étape 10.

A l'étape 8, les données de provisionnement obtenues sont sélectionnées pour permettre un accès au réseau de données. Le procédé est terminé.

Dans les étapes précédentes, la sélection de l'utilisateur de la carte WIM est implicite, dans la mesure où la carte WIM est dédiée à un utilisateur. Il reste toujours possible de vérifier l'identité de l'utilisateur du terminal, en lui demandant d'entrer sur le terminal un numéro d'identification personnel avant de lui permettre d'utiliser les données de provisionnement contenues dans la carte WIM.

A l'étape 10, le terminal détermine si la carte WIM contient des fichiers prévoyant le changement de réseau d'accès (fichiers de "roaming"). Si tel est le cas, le terminal vérifie si ces fichiers contiennent des données de provisionnement, ou le cas échéant requiert des données de provisionnement depuis le réseau. Les données de provisionnement peuvent alors être stockées dans le fichier de changement de la carte WIM, et être utilisées, comme indiqué à l'étape 12, et le procédé est terminé. Sinon, on passe à l'étape 32.

On n'a pas représenté à la figure la possibilité de proposer à l'utilisateur de stocker dans les moyens de stockage protégés les données de provisionnement obtenues à l'étape 12; les données peuvent être stockées dans le terminal, dans la carte WIM ou dans les deux.

A l'étape 14, on a déterminé qu'il n'y a pas de carte WIM dans le terminal. On cherche s'il y a une carte SIM. Si tel est le cas, on passe à l'étape 16, et si tel n'est pas le cas, on passe à l'étape 24.

A l'étape 16, le terminal détermine si la carte SIM contient des données de provisionnement protégées correspondant à l'utilisateur et au réseau téléphonique identifiés. Si tel est le cas, on passe à l'étape 18, sinon, on passe à l'étape 20.

A l'étape 18, les données de provisionnement obtenues dans la carte SIM sont sélectionnées pour permettre un accès au réseau de données. Le procédé est terminé.

Dans les étapes précédentes, la sélection de l'utilisateur de la carte SIM est implicite, dans la mesure où la carte SIM est dédiée à un utilisateur. Il reste aussi possible comme dans le cas de la carte WIM de vérifier l'identité de l'utilisateur du terminal, en lui demandant d'entrer sur le terminal un numéro d'identification personnel avant de lui permettre d'utiliser les données de provisionnement contenues dans la carte SIM.

A l'étape 20, le terminal détermine si la carte SIM, à défaut de contenir des données de provisionnement utilisables, contient des fichiers prévoyant le changement de réseau d'accès. Si tel est le cas, le terminal détermine si le fichier de changement de réseau d'accès contient des données de provisionnement, ou le cas échéant, requiert les données de provisionnement correspondantes, les stocke dans le fichier de changement de la carte SIM, et utilise les données correspondantes, comme indiqué à l'étape 22, et le procédé est terminé. Sinon, on passe à l'étape 24.

Comme pour l'étape 12, on n'a pas représenté à la figure la possibilité de proposer à l'utilisateur de stocker dans les moyens de stockage protégés de la carte SIM les données de provisionnement obtenues à l'étape 22.

A l'étape 24, on a déterminé qu'il n'y a pas dans la carte WIM ou dans la carte SIM de données de provisionnement stockées ou disponibles grâce à des fichiers de "roaming". On détermine si le terminal lui-même contient des données de provisionnement protégées correspondant à l'utilisateur et au réseau téléphonique identifiés. Si tel est le cas, on passe à l'étape 26, sinon, on passe à l'étape 28.

A l'étape 26, les données de provisionnement obtenues dans le terminal sont sélectionnées pour permettre un accès au réseau de données. Le procédé est terminé.

A l'étape 28, on détermine si le terminal, à défaut de contenir des données de provisionnement utilisables, contient des fichiers prévoyant le changement de réseau d'accès. Si tel est le cas, le terminal requiert les données de provisionnement correspondantes, les stocke dans son fichier de changement ("roaming"), et utilise les données correspondantes, comme indiqué à l'étape 30, et le procédé est terminé. Sinon, on passe à l'étape 32.

Comme pour les étapes 12 et 22, on n'a pas représenté à la figure la possibilité de proposer à l'utilisateur de stocker dans les moyens de stockage protégés du terminal les données de provisionnement obtenues à l'étape 30.

A l'étape 32, on a déterminé qu'il n'y a pas de données de provisionnement stockées ou disponibles grâce à des fichiers de "roaming". Le procédé est terminé, et il convient de procéder à un provisionnement.

Le procédé de la figure correspond à un ordre de priorité décroissant entre les données de provisionnement stockées dans la carte WIM, dans la carte SIM ou dans le terminal. Il ne prévoit pas un changement d'utilisateurs.

De préférence, les données stockées dans les moyens de stockage de données de provisionnement protégées ne sont effacées que sur intervention de l'utilisateur, soit en supprimant les données correspondantes, soit lors d'une mise à jour comme indiqué ci-dessus en référence aux étapes 12, 22 et 26.

Bien entendu, l'invention n'est pas limitée aux modes de réalisation préférés décrits plus haut. Elle s'applique à d'autres types de réseaux d'accès que le réseau GSM. On pourrait notamment changer l'ordre de priorité prévu dans l'exemple de la figure, le lieu de stockage des données de provisionnement, ou le type d'identification proposée pour les données de provisionnement.

Plus généralement, l'invention s'applique pour tous les types de réseaux d'accès, et par exemple à un réseau téléphonique fixe, au réseau GSM, ou à d'autres formats de réseau d'accès. Le terminal peut donc être non seulement un terminal mobile, mais aussi un terminal fixe dans le cas d'un réseau d'accès constitué par un réseau téléphonique fixe, ou encore un autre type de terminal pour encore un autre type de réseau.

Dans les exemples, le seul réseau de données mentionné est le réseau Internet. On peut appliquer l'invention à d'autres types de réseau de données, en mode paquet, et par exemple à un réseau WAP, ou encore à un réseau X25 tel que Transpac avec un accès grâce à un protocole PAD (acronyme de l'anglais "Packet assembling desassembling", assemblage désassemblage de paquets).

Dans les exemples, les données protégées ne peuvent être mises à jour ou effacer sans intervention de l'utilisateur du terminal. Il est aussi possible de ne permettre une modification ou un effacement des données que par l'opérateur ou par le fournisseur de service ou de contenu; une intervention conjointe de l'opérateur du réseau d'accès, du fournisseur d'accès ou de contenu, et/ou de l'utilisateur est aussi possible.

Dans tous les exemples, les moyens de stockage des données protégées sont "dans" le terminal. On entend par là que les données protégées sont stockées soit dans le terminal lui-même, soit dans un support qui en usage normal du terminal est solidaire de celui-ci, et par exemple une carte SIM ou une carte WIM.

## Revendications

1. Un terminal de télécommunication, pour l'accès à un réseau de données à travers un réseau d'accès en utilisant un ensemble de données de provisionnement, le terminal présentant des moyens de stockage d'un ensemble de données de provisionnement courantes, **caractérisé en ce que** le terminal présente aussi des moyens de stockage d'au moins un ensemble de données de provisionnement protégées ne pouvant être mises à jour sans intervention de l'utilisateur du terminal, et des moyens de recopie, dans les moyens de stockage des données de provisionnement courantes, des données de provisionnement protégées contenues dans les moyens de stockage des données de provisionnement protégées.

2. Un terminal de télécommunicartion, pour l'accès à un réseau de données à travers un réseau d'accès en utilisant un ensemble de données de provisionnement, le terminal présentant des moyens de stockage d'un ensemble de données de provisionnement courantes, **caractérisé en ce que** le terminal présente aussi des moyens de stockage d'au moins un ensemble de données de provisionnement protégées ne pouvant êtrre mises à jour sans intervention de l'opérateur du réseau d'accès, et des moyens de recopie, dans les moyens de stockage des données de provisionnement courantes, des données de provisionnement protégées contenues dans les moyens de stockage des données de provisionnement protégées.

3. Un terminal de télécommunication, pour l'accès à un réseau de données à travers un réseau d'accès en utilisant un ensemble de données de provisionnement pour un fournisseur d'accès, le terminal présentant des moyens de stockage d'un ensemble de données de provisionnement courantes, **caractérisé en ce que** le terminal présente aussi des moyens de stockage d'au moins un ensemble de données de provisionnement protégées ne pouvant être mises à jour sans intervention du fournisseur d'accès, et des moyens de recopie, dans les moyens de stockage des données de provisionnement courantes, des données de provisionnement protégées contenues dans les moyens de stockage des données de provisionnement protégées.

4. Le terminal de la revendication 1, 2 ou 3, **caractérisé en ce que** le terminal est un terminal mobile.

5. Le terminal de l'une des revendications 1 à 4, **caractérisé en ce que** le dit moyens de stockage de données de provisionnement protégées sont susceptibles de stocker plusieurs ensembles de données de provisionnement, pour plusieurs accès au réseau de données.

6. Le terminal de l'une des revendications 1 à 5, **caractérisé en ce que** les moyens de stockage de données de provisionnement protégées sont susceptibles de stocker plusieurs ensembles de données de provisionnement, pour plusieurs accès au réseau de données.

7. Le terminal de l'une des revendications 1 à 6, **caractérisé en ce qu'**il comprend des moyens de stockage de données d'identification pour chaque ensemble de provisionnement stocké dans les moyens de stockage de données de provisionnement protégées.

8. Le terminal de l'une des revendications 1 à 7, **caractérisé en ce que** les moyens de stockage de données de provisionnement protégées sont disposés dans un support dédié à un réseau d'accès ou à un opérateur.

9. Le terminal de l'une des revendications 1 à 8, **caractérisé en ce que** les moyens de stockage de données de provisionnement protégées sont disposés dans un support dédié à un fournisseur d'accès ou de contenu.

## Claims

1. Telecommunication terminal for accessing a data network via an access network using a set of provisioning data, the terminal having means for storing a current set of provisioning data **characterised in that** the terminal also has means for storing at least one set of protected provisioning data that cannot be updated without the intervention of the terminal user, and, in the means for storing current provisioning data, means for copying protected provisioning data contained in the means for storing protected provisioning data.

2. Telecommunication terminal for accessing a data network via an access network using a set of provisioning data, the terminal having means for storing a current set of provisioning data **characterised in that** the terminal also has means for storing at least one set of protected provisioning data that cannot be updated without the intervention of the access network operator, and, in the means for storing current provisioning data, means for copying protected provisioning data contained in the means for storing protected provisioning data.

3. Telecommunication terminal for accessing a data network via an access network using a set of provisioning data, the terminal having means for storing a current set of provisioning data **characterised in that** the terminal also has means for storing at least one set of protected provisioning data that cannot be updated without the intervention of the access provider, and, in the means for storing current provisioning data, means for copying protected provisioning data contained in the means for storing protected provisioning data.

4. Terminal, according to claim 1, 2 or 3, **characterised in that** the terminal is a mobile terminal.

5. Terminal, according to claims 1 to 4, **characterised in that** said data network is a packet-switched data network such as a network using the Internet protocol (IP) or the wireless application protocol (WAP).

6. Terminal according to any one of claims 1 to 5, **characterised in that** the protected provisioning data storage means are adapted to store a plurality of sets of provisioning data for a plurality of accesses to the data network.

7. Terminal according to any one of claims 1 to 6, **characterised in that** it includes identification data storage means for each provisioning set stored in the protected provisioning data storage means.

8. Terminal according to any one of claims 1 to 7, **characterised in that** the protected provisioning data storage means are in a medium dedicated to an access network or to an operator.

9. The terminal according to any one of claims 1 to 8, **characterised in that** the protected provisioning data storage means are in a medium dedicated to an access or content provider.

## Patentansprüche

1. Ein Telekommunikationsendgerät für den Zugriff auf ein Datennetz über ein Zugangsnetz unter Nutzung eines Satzes an Anbindungsdaten, wobei das Endgerät Speichermittel für den aktuellen Satz an Anbindungsdaten aufweist, **dadurch gekennzeichnet, dass** das Endgerät auch Speichermittel für mindestens einen geschützten Satz an Anbindungsdaten umfasst, die nicht ohne Eingriff des Endgerätnutzers aktualisiert werden können, sowie, in den Mitteln zur Speicherung der aktuellen Anbindungsdaten, Mittel zur Kopie der geschützten Anbindungsdaten, die in den Speichermitteln für die geschützten Anbindungsdaten enthalten sind.

2. Ein Telekommunikationsendgerät für den Zugriff auf ein Datennetz über ein Zugangsnetz unter Nutzung eines Satzes an Anbindungsdaten, wobei das Endgerät Mittel zur Speicherung eines Satzes an aktuellen Anbindungsdaten aufweist, **dadurch gekennzeichnet, dass** das Endgerät außerdem Mittel zur Speicherung mindestens eines Satzes an geschützten Anbindungsdaten aufweist, die nicht ohne Eingriff des Zugangsnetzbetreibers aktualisiert werden können, sowie, in den Mitteln zur Speicherung der aktuellen Anbindungsdaten, Mittel zur Kopie der geschützten Anbindungsdaten, die in den Speichermitteln für die geschützten Anbindungsdaten enthalten sind.

3. Ein Telekommunikationsendgerät für den Zugriff auf ein Datennetz über ein Zugangsnetz unter Nutzung eines Satzes an Anbindungsdaten für einen Internet-Anbieter, wobei das Endgerät Mittel zur Speicherung eines Satzes an aktuellen Anbindungsdaten aufweist, **dadurch gekennzeichnet, dass** das Endgerät außerdem Mittel zur Speicherung mindestens eines Satzes an geschützten Anbindungsdaten aufweist, die nicht ohne Eingriff des Internet-Anbieters aktualisiert werden können, sowie, in den Speichermitteln für die aktuellen Anbindungsdaten, Mittel zur Kopie der geschützten Anbindungsdaten, die in den Speichermitteln der geschützten Anbindungsdaten enthalten sind.

4. Das Endgerät gemäß Anspruch 1, 2 oder 3, **dadurch gekennzeichnet, dass** es sich bei dem Endgerät um ein Mobilfunkendgerät handelt.

5. Das Endgerät gemäß einem der Ansprüche 1 bis 4, **dadurch gekennzeichnet, dass** es sich bei dem genannten Datennetz um ein Datennetz im Paketmodus handelt, wie z.B. ein Netz mit IP-Protokoll oder WAP-Protokoll.

6. Das Endgerät gemäß einem der Ansprüche 1 bis 5, **dadurch gekennzeichnet, dass** die Speichermittel für die geschützten Anbindungsdaten in der Lage sind, mehrere Anbindungsdatensätze für mehrere Zugriffe auf das Datennetz zu speichern.

7. Das Endgerät gemäß einem der Ansprüche 1 bis 6, **dadurch gekennzeichnet, dass** es Speichermittel für die Identifikationsdaten für jeden in den Speichermitteln für die geschützten Anbindungsdaten enthaltenen Anbindungsdatensatz umfasst.

8. Das Endgerät gemäß einem der Ansprüche 1 bis 7, **dadurch gekennzeichnet, dass** die Speichermittel für die geschützten Anbindungsdaten auf einem dem Zugangsnetz oder dem Betreiber zugeordneten Datenträger angeordnet sind.

9. Das Endgerät gemäß einem der Ansprüche 1 bis 8, **dadurch gekennzeichnet, dass** die Speichermittel für die geschützten Anbindungsdaten auf einem dem Internet-Anbieter oder dem Anbieter von Inhalten zugeordneten Datenträger angeordnet sind.
